# EUROPÄISCHE PATENTSCHRIFT

(11) **EP 2 408 834 B1**
(45) Veröffentlichungstag und Bekanntmachung des Hinweises auf die Patenterteilung: **29.10.2014**
(21) Anmeldenummer: 10707929.5
(22) Anmeldetag: 12.03.2010
(51) Int. Cl.: C08J 9/40, C08L 75/04

(54) **VERFAHREN ZUR HERSTELLUNG VON XEROGEL-KOMPOSITEN**
METHOD FOR PRODUCING XEROGEL COMPOSITES
PROCÉDÉ DE PRODUCTION DE COMPOSITES DE XÉROGEL

(30) Priorität: 16.03.2009 EP 09155261
(43) Veröffentlichungstag der Anmeldung: 25.01.2012
(73) Patentinhaber: BASF SE, 67056 Ludwigshafen (DE)
(72) Erfinder: FRICKE, Marc, 49080 Osnabrück (DE); SCHÄDLER, Volker, Ann Arbor MI 48104 (US); BREINER, Thomas, 64646 Heppenheim (DE); SÁNCHEZ-FERRER, Antoni, CH-8005 Zürich (CH); SIMON, Francois-Xavier, 67056 Ludwigshafen (DE); SCHMIDT, Daniel, Tewksbury MA 01876 (US)
(86) Internationale Anmeldenummer: PCT/EP2010/053193
(87) Internationale Veröffentlichungsnummer: WO 2010/105985

(56) Entgegenhaltungen:
- WO-A1-2009/027310
- US-A- 5 478 867
- US-A1- 2006 211 840

## Beschreibung

Die Erfindung betrifft ein Verfahren zur Herstellung von Xerogel-Kompositen umfassend:
(a) Bereitstellen einer Zusammensetzung enthaltend eine organische Gelvorstufe (A) umfassend eine Monomerkomponente (A1) aus mindestens einem mehrfunktionellen Isocyanat und eine Monomerkomponente (A2) aus mindestens einer Verbindung ausgewählt aus mehrfunktionellen Aminen und mehrfunktionellen Hydroxyverbindungen;
(b) Umsetzung der Gelvorstufe (A) in Gegenwart eines offenzelligen makroporösen Schaumstoffes (B) und eines Lösungsmittels (C) zu einem Xerogel-Komposit;
(c) Trocknen des Xerogel-Komposits durch Überführung des Lösungsmittels (C) in den gasförmigen Zustand bei einer Temperatur und einem Druck unterhalb der kritischen Temperatur und des kritischen Drucks des Lösungsmittels (C).

Weiterhin betrifft die Erfindung die so erhältlichen Xerogel-Komposite sowie deren Verwendung als Dämmstoff, zur thermischen Isolation, für Vakuumisolationspaneele, in Kühlgeräten oder in Gebäuden.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Nach den Verfahren des Standes der Technik lässt sich die Flüssigkeit aus dem Gel beispielsweise unter überkritischen Bedingungen bzw. durch überkritische Fluide entfernen, also bei Drucken und Temperaturen oberhalb des kritischen Drucks pₖᵣᵢₜ bzw. der kritischen Temperatur Tₖᵣᵢₜ der Flüssigkeit. Solche Trocknungsverfahren, die überkritische Trocknung einschließen, sind weitläufig bekannt.

Die Trocknung unter überkritischen Bedingungen ist jedoch apparativ sehr aufwendig, da in geschlossenen Behältern bei definierten Druck- und Temperaturbedingungen gearbeitet werden muss. Außerdem sind Lösungsmittelwechsel erforderlich. Dies verkompliziert das Verfahren zusätzlich. Eine Trocknung mit überkritischen Fluiden vermindert daher die Wirtschaftlichkeit. Alternativ kann die Flüssigkeit durch Gefriertrocknen entfernt werden. Allerdings verändert die Flüssigkeit beim Gefrieren ihr Volumen, wodurch das räumliche Polymernetzwerk zerstört wird. Man erhält auf diese Weise keinen Schaum, sondern ein Pulver. Zudem ist auch ein Gefriertrocknungsschritt apparativ aufwendig.

Wird ein Gel in einem subkritischen Verfahrensschritt getrocknet, dann verändert sich im Allgemeinen die Porenstruktur und das Gel schrumpft unter gleichzeitiger Erniedrigung der Porosität des so erhaltenen Xerogels im Vergleich zur analogen Entfernung des Lösungsmittels unter überkritischen Bedingungen. Der Grund sind die während des Verdampfens des Lösungsmittels unter subkritischen Bedingungen wirkenden Kapillarkräfte. Die Kapillarkräfte sind zudem bei mittleren Porengrößen kleiner 1 Mikrometer besonders stark, da sie umgekehrt proportional mit abnehmender Porengröße ansteigen.

Bekannte Strategien zur Verringerung der Schrumpfung umfassen die Herstellung eines ausreichend steifen beziehungsweise stabilen Gels mittels spezifischer Zusammensetzungen sowie die Verringerung der Kapillarkräfte beispielsweise durch Austausch des Lösungsmittels gegen ein weniger polares Lösungsmittel, das bei der Trocknung des Gels eine geringere Schrumpfung verursacht.

Ein Austausch des Lösungsmittels ist jedoch apparativ aufwendig und in vielen Fällen unerwünscht. Zudem führt die sub-kritische Trocknung des Gels auch nach dem Austausch des Lösungsmittels gegen eines, welches geringere Kapillarkräfte verursacht, oft dennoch zu einer Verringerung der Porosität.

Bekannte organische Xerogele sind beispielsweise auf Basis von Phenol-Aldehyd-Harzen oder auf Basis von Polyurethan und/oder Polyharnstoff aufgebaut. Verfahren zu deren Herstellung, die alternative Maßnahmen zur Begrenzung der Schrumpfung während des Trocknens vorsehen, sind an sich ebenfalls bekannt. Die bekannten Verfahren, welche einen Austausch des zu extrahierenden Lösungsmittels nicht erfordern, beruhen auf spezifischen Zusammensetzungen, die ein ausreichend stabiles poröses Material bilden, oder auf der Verwendung von faserförmigen Verstärkungsmitteln.

Aus der WO-2007/146945 sind zudem Aerogel-Schaumkomposite bekannt. Die genannten Aerogel-Schaumstoffkomposite umfassen insbesondere anorganische Aerogele, welche in Schaumstoffen wie z. B. solchen aus Polyurethan gehärtet werden, woran sich ein überkritischer Trocknungsschritt anschließt. Die Publikation erwähnt die mögliche Verwendung von organischen Aerogelen ebenso wie die Anwendung unterkritischer Trocknung. Die Publikation verwendet eine Matrix aus Schaumstoff, um die inhärente Brüchigkeit der (anorganischen) Aerogele zu reduzieren und gleichzeitig weitere Eigenschaften mechanischer Art wie Flexibilität zu verbessern.

Xerogele auf Basis von Polyharnstoff oder Polyurethan sind an sich bekannt und den anorganischen Aerogelen in den mechanischen Eigenschaften oft überlegen.

Aus der WO-2008/138978 sind Xerogele auf Basis von mindestens einem mehrfunktionellen Isocyanat und mindestens einem mehrfunktionellen aromatischen Amin bekannt, deren volumengewichteter mittlerer Porendurchmesser höchstens 5 Mikrometer beträgt.

Die thermische Leitfähigkeit der bekannten Xerogele ist jedoch nicht für alle Anwendungen ausreichend. Für Anwendungen im Bereich von Drücken oberhalb des Vakuumbereiches, beispielsweise im Druckbereich von ungefähr 1 bis ungefähr 100 mbar, jedoch insbesondere bei Normaldruck ist die thermische Leitfähigkeit im Allgemeinen nicht zufriedenstellend. Zudem sind die Materialeigenschaften, beispielsweise die mechanische Stabilität des Xerogels, die Porosität und insbesondere die Dichte, nicht ausreichend.

Unterkritisches Entfernen des Lösungsmittels ist aus Sicht einer ökonomischen Herstellung äußerst wünschenswert. Somit sind die Xerogele den Aerogelen in dieser Hinsicht überlegen. Die vorliegende Erfindung betrifft ausschließlich Xerogele. Eine unterkritische Trocknung bleibt anorganischen Xerogelen im Allgemeinen aufgrund ihrer schlechten mechanischen Eigenschaften verwehrt.

Es bestand daher die Aufgabe, die vorgenannten Nachteile zu vermeiden. Insbesondere sollte ein poröses Material zur Verfügung gestellt werden, das eine geringe thermische Leitfähigkeit aufweist. Insbesondere sollten die Xerogele auch bei Drücken oberhalb des Vakuumbereiches, insbesondere in einem Druckbereich von ungefähr 1 mbar bis ungefähr 100 mbar sowie bei Normaldruck eine geringe thermische Leitfähigkeit aufweisen. Dies ist wünschenswert, da in Vakuumpaneelen im Laufe der Zeit eine Druckzunahme erfolgt. Darüber hinaus sollten die Xerogele eine geringe Entflammbarkeit und eine hohe Temperaturbeständigkeit aufweisen und gleichzeitig mechanisch stabil sein.

Eine weitere Aufgabe bestand darin, ein Xerogel mit geringer Porengröße, hoher Porosität und gleichzeitig hoher mechanischer Stabilität bereitzustellen. Insbesondere sollte die Porosität im Vergleich zu bekannten Xerogelen weiter erhöht und gleichzeitig die Dichte verringert werden.

Demgemäß wurde das eingangs definierte Verfahren und die nach dem Verfahren erhältlichen organischen Xerogele gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

Unter einem Xerogel wird im Rahmen der vorliegenden Erfindung ein poröses Material mit einer Porosität von mindestens 70 Vol.-% und einer volumengemittelten mittleren Porengröße von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("sub-kritische Bedingungen") aus dem Gel entfernt wurde.

### Schritt (a)

Erfindungsgemäß erfolgt im Rahmen von Schritt (a) das Bereitstellen einer Zusammensetzung enthaltend eine organische Gelvorstufe (A) umfassend eine Monomerkomponente (A1) aus mindestens einem mehrfunktionellen Isocyanat und eine Monomerkomponente (A2) aus mindestens einer Verbindung ausgewählt aus mehrfunktionellen Aminen und mehrfunktionellen Hydroxyverbindungen.

Unter Funktionalität einer Verbindung soll im Rahmen der vorliegenden Erfindung die Zahl der reaktiven Gruppen pro Molekül verstanden werden. Im Fall der Monomerkomponente (A1) ist die Funktionalität die Anzahl der Isocyanatgruppen pro Molekül. Im Falle der Aminogruppen der Monomerkomponente (A2) bezeichnet die Funktionalität die Zahl der reaktiven Amino- bzw. Hydroxygruppen pro Molekül. Eine mehrfunktionelle Verbindung weist dabei eine Funktionalität von mindestens 2 auf.

Falls als Monomerkomponente (A1) beziehungsweise (A2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (A1) in diesem Fall verschiedene mehrfunktionelle Isocyanate enthält. Als Bestandteil der Komponente (A1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4-und/oder -2,6-cyclohexandiisocyanat und 4,4'-, 2,4'- und/oder 2,2'-Dicyclohexylmethandiisocyanat.

Als mehrfunktionelle Isocyanate der Komponente (A1) sind aromatische Isocyanate bevorzugt. Besonders bevorzugt sind als mehrfunktionelle Isocyanate der Komponente (A1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,3 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von Elastogran GmbH unter dem Namen Lupranat© vertrieben.

Vorzugsweise beträgt die Funktionalität der Komponente (A1) mindestens zwei, insbesondere mindestens 2,2 und besonders bevorzugt mindestens 2,5. Die Funktionalität der Komponente (A1) beträgt bevorzugt von 2,2 bis 4 und besonders bevorzugt von 2,5 bis 3.

Vorzugsweise beträgt der Gehalt an Isocyanatgruppen der Komponente (A1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

Die Viskosität der eingesetzten Komponente (A1) kann in einem weiten Bereich variieren. Vorzugsweise weist die in Schritt (a) des erfindungsgemäßen Verfahrens eingesetzte Komponente (A1) eine Viskosität von 100 bis 3000 mPa.s, besonders bevorzugt von 200 bis 2500 mPa.s, auf.

In einer besonders bevorzugten Ausführungsform besteht die Monomerkomponente (A1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat.

Im Rahmen dieser besonders bevorzugten Ausführungsform enthält die Komponente (A1) ganz besonders bevorzugt oligomeres Diphenylmethandiisocyanat und weist eine Funktionalität von mindestens 2,5 auf.

Erfindungsgemäß umfasst die organische Gelvorstufe (A) eine Monomerkomponente (A2) aus mindestens einer Verbindung ausgewählt aus mehrfunktionellen Aminen und mehrfunktionellen Hydroxyverbindungen. Mehrfunktionelle Amine sind im Rahmen der vorliegenden Erfindung bevorzugt. Als mehrfunktionelle Amine kommen im Prinzip sowohl aliphatische als auch aromatische Amine in Betracht.

Sofern als mehrfunktionelle Amine aliphatische Amine verwendet werden, so sind unter mehrfunktionellen Aminen solche Amine zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären. Vorzugsweise enthalten die mehrfunktionellen aliphatischen Amine mindestens eine primäre Aminogruppe, insbesondere mindestens zwei primäre Aminogruppen.

Sofern als mehrfunktionelles Amin ein aliphatisches Amin verwendet wird, kommen insbesondere folgende mehrfunktionellen Amine in Betracht: Bis(2-aminoethyl)amin, auch Diethylentriamin genannt, Tris(2-aminoethyl)amin, Triethylentetramin sowie weitere Abkömmlinge des Ethylenimins, Tetramethylendiamin, Ethylendiamin, Diamine des Butans und des Pentans, 2-Methyl-1,5-diaminopentan, 1,6-Diaminohexan, 1,7-Diaminoheptan, 1,8- Diaminooctan, 1,9-Diaminononan, 1,10-Diaminodecan, 1,12-Diaminododecan, 1-Amino-3-aminomethyl-3,5,5-trimethyl-cyclohexan, 4,4'-Methylenbis(cyclohexylamin), 4,4'-, 2,4'- und 2,2'-Diaminodicyclohexyl-1,2- und 1,3-Propandiamin, 2-Methyl-1,2-diaminopropan, 2,2-Dimethyl-1,3-diaminopropan, bis-(4-amino-3-methylcyclohexyl)methan, 1,2- und/oder 1,4-Diaminocyclohexan, bis(1,3-methylamino)cyclohexan, bis-Hydrazide, bis-Semicarbazide, N,N,N-tris-(2-aminoethyl)amin, Guanidin, N-(2-aminoethyl)-1,3-diaminopropan und ethoxylierte und/oder propoxylierte Verbindungen mit Aminogruppen als Endgruppe.

Aliphatische mehrfunktionelle Amine mit mindestens zwei primären Aminogruppen sind bevorzugt, insbesondere Bis(2-aminoethyl)amin, Tris(2-aminoethyl)amin, Triethylentetramin, Ethylendiamin, Tetraethylenpentamin, Pentaethylenhexamin, Diaminopropylenethylendiamin, Propylendiamin, Hexamethylendiamin, Diaminocyclohexan, Triglykoldiamin, Polymere von Alkylenoxiden wie Ethylenoxid oder Propylenoxid, in denen die Hydroxylendgruppen durch Aminogruppen ersetzt sind, 1,3-Diaminopropan-2-ol, ω,ω'-Diaminodi-n-hexylamin, und Dimethyl-1,4-diaminoadipat.

Die geeigneten mehrfunktionellen aliphatischen Amine können einzeln oder in Mischungen eingesetzt werden.

Besonders bevorzugt als aliphatische Amine sind Polyalkylenpolyamine. Unter dem Begriff Polyalkylenpolyamin sollen im Rahmen der vorliegenden Erfindung aliphatische Amine verstanden werden, die mindestens 3 Aminogruppen (primär, sekundär oder tertiär) enthalten und die ein gewichtsmittleres Molekulargewicht (Mw) von mindestens 500 g/mol aufweisen.

Das Molekulargewicht der in Betracht kommenden Polyalkylenpolyamine kann in einem weiten Bereich variieren, insbesondere von 500 g/mol bis 3.000.000 g/mol. Vorzugsweise weisen die als Komponente (A2) bevorzugten Polyalkylenpolyamine ein gewichtsmittleres Molekulargewicht (Mw) von 500 g/mol bis 50.000 g/mol, vorzugsweise von 800 g/mol bis 25.000 g/mol, besonders bevorzugt von 1000 g/mol bis 10.000 g/mol, auf.

Als Polyalkylenpolyamine sind insbesondere Polyethylenimine besonders bevorzugt. Unter Polyethyleniminen werden im Rahmen der vorliegenden Erfindung sowohl Oligomere als auch Homo- und Copolymere verstanden, welche die Gruppierung -CH₂-CH₂-NH- aufweisen sowie mindestens 3 Aminogruppen enthalten und ein gewichtsmittleres Molekulargewicht (Mw) von mindestens 500 g/mol aufweisen.

Vorzugsweise sind die Polyethylenimine aus Einheiten aufgebaut, die ausgewählt sind aus terminalen Ethylenimineinheiten der Struktur-(CH₂-CH₂-NH₂), linearen Ethylenimineinheiten der Struktur -(CH₂-CH₂-NH)- und verzweigten Ethylenimineinheiten der Struktur N-(CH₂CH₂-)₃.

Sofern als Amin ein aliphatisches Amin verwendet wird, dann ist Polyethylenimin besonders bevorzugt. Das Molekulargewicht der in Betracht kommenden Polyethylenimine kann in einem weiten Bereich variieren, insbesondere von 500 g/mol bis 3.000.000 g/mol. Vorzugsweise weisen die als Komponente (A2) besonders bevorzugten Polyethylenimine ein gewichtsmittleres Molekulargewicht (Mw) von 500 g/mol bis 500.000 g/mol, vorzugsweise von 800 g/mol bis 200.000 g/mol, besonders bevorzugt von 800 g/mol bis 50.000 g/mol, insbesondere von 1000 g/mol bis 25.000 g/mol, ganz besonders bevorzugt von 1000 g/mol bis 10.000 g/mol, auf.

Das gewichtsmittlere Molekulargewicht von Polyalkylenpolyaminen wird im Rahmen der vorliegenden Erfindung mittels statischer Lichtstreuung bestimmt, worauf sich alle im Rahmen dieser Erfindung genannten Molekulargewichte der Polyalkylenpolyamine und Polyethylenimine beziehen. Hierbei wird zunächst das Brechungsindexinkrement dn/dc durch Differential-Refraktometrie bestimmt. Die Messung durch statische Lichtstreuung erfolgt in einem thermodynamisch guten Lösungsmittel. Der Fachmann wählt die Konzentration des Polyalkylenpolyamins im Lösungsmittel zudem so, dass eine verdünnte Lösung vorliegt. Die Auswertung des Molekulargewichts erfolgt gemäß Auftragung nach Zimm.

Der Einsatz von Polyethyleniminen mit einem hohen Molekulargewicht beziehungsweise einer hohen Viskosität führt im Allgemeinen zu Gelen beziehungsweise Xerogelen mit besonders guten Eigenschaften, insbesondere hinsichtlich Porosität, Wärmeleitfähigkeit und Festigkeit. Der Einsatz von Polyethyleniminen mit einem niedrigen Molekulargewicht beziehungsweise mit einer niedrigen Viskosität führt im Allgemeinen zu einer besonders einfachen Durchführung des Herstellungsverfahrens bei ausreichend guten Eigenschaften, insbesondere hinsichtlich Porosität, Wärmeleitfähigkeit und Festigkeit.

Die Viskosität der Polyethylenimine liegt im allgemeinen im Bereich von 100 bis 300.000 mPa.s, vorzugsweise im Bereich von 500 bis 200.000 mPa.s, insbesondere von 1000 bis 100.000 mPa.s, ermittelt gemäss DIN EN ISO 2555 (Viskosimeter des Typs RVT der Firma Brookfield, 20°C, 20 Upm).

Polyethylenimine sind beispielsweise nach den Verfahren in Ullmann Electronic Release unter dem Stichwort "Aziridine" oder gemäss WO-A 94/12560 erhältlich.

Die Ethylenimin-Homopolymerisate und Oligomere auf Basis von Ethylenimin sind im Allgemeinen durch Polymerisation von Ethylenimin (Aziridin) in wässriger oder organischer Lösung in Gegenwart von säureabspaltenden Verbindungen, Säuren oder LewisSäuren erhältlich. Derartige Homopolymerisate sind lineare oder vorzugsweise verzweigte Polymere. Letztere weisen in der Regel primäre, sekundäre und tertiäre Aminogruppen im Verhältnis von beispielsweise ungefähr 1 : 1 : 0,7 auf. Die Verteilung der Aminogruppen wird mittels ¹³C-NMR Spektroskopie bestimmt.

Sofern als Polyethylenimin Copolymere eingesetzt werden, sind Comonomere bevorzugt, welche mindestens zwei Aminofunktionen aufweisen. Als geeignete Comonomere seien beispielsweise Alkylendiamine mit 2 bis 10 C-Atomen im Alkyenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Vorzugsweise werden als Polyethylenimine jedoch solche eingesetzt, die im Wesentlichen aus Ethylenimin aufgebaut sind, insbesondere Homopolymerisate von Ethylenimin.

Die Polyethylenimine werden vorzugsweise in wasserfreier Form eingesetzt, wobei wasserfrei bedeutet, dass der Wassergehalt von 0 bis 1,5 Gew.-% gemäß DIN 53715 nach Karl Fischer, vorzugsweise von 0 bis 1 Gew.-%, besonders bevorzugt von 0 bis 0,5 Gew.-% beträgt.

Besonders bevorzugt sind die Polyethylenimine hochverzweigt. Unter hochverzweigten Polyethyleniminen werden im Rahmen dieser Erfindung unvemetzte Makromoleküle mit -NH-Gruppen verstanden, die bezüglich ihres strukturellen Aufbaus, insbesondere bezüglich der Länge und Abfolge der Abschnitte zwischen Verzweigungspunkten, uneinheitlich sind. Sie können entweder ausgehend von einem Zentralmolekül analog zu Dendrimeren, jedoch mit uneinheitlicher Kettenlänge der Äste aufgebaut sein. Sie können aber auch linear, mit funktionellen Seitengruppen, aufgebaut sein oder aber, als Kombination der beiden Extreme, lineare und verzweigte Molekülteile aufweisen.

Der Verzweigungsgrad (degree of branching, DB) ist definiert als DB = (T + Z) / (T + Z + L), wobei T die Anzahl der terminalen Monomereinheiten, Z die Anzahl der verzweigten Monomereinheiten, und L die Anzahl der linearen Monomereinheiten, bedeutet und wird üblicherweise in % angegeben. Diese Anzahlen werden mittels ¹³C-Kemresonanzspektren als primäre (ergibt T), tertiäre (ergibt Z) sowie sekundäre (ergibt L) Aminogruppen bestimmt. Zur Definition des degree of branching siehe auch H. Frey et al., Acta Polym. 1997, 48, 30.

Der Verzweigungsgrad DB der besonders bevorzugten hochverzweigten Polyethylenimine beträgt von 40 bis 100 %, bevorzugt von 50 bis 80 % und insbesondere von 55 bis 70 %.

Geeignete Polyethylenimine sind kommerziell erhältlich, etwa als Lupasol® von BASF.

Hochverzweigte Polyethylenimine mit von 2 bis 6, insbesondere von 2 bis 4 primären Aminogruppen und einem zahlenmittleren Molekulargewicht von 400 bis ungefähr 10000 g/mol, vorzugsweise von 800 bis ungefähr 6000 g/mol und die ein Verzweigungsgrad DB von 40 bis 100 %, bevorzugt von 50 bis 80 % und insbesondere von 55 bis 70 % aufweisen, sind ganz besonders bevorzugt.

Falls als Monomerkomponente (A2) ein aliphatisches Amin verwendet wird, dann erfolgt in Schritt (a) das Bereitstellen der Monomerkomponenten (A1) und (A2) vorzugsweise in getrennter Form.

Falls als Monomerkomponente (A2) ein aliphatisches Amin verwendet wird, dann liegen die primären Aminogruppen der Monomerkomponente (A2) zu Beginn von Schritt (b) vorzugsweise geschützt vor. Besonders bevorzugt liegen die primären Aminogruppen der Monomerkomponente (A2) vor Durchführung von Schritt (b) geschützt vor. Ganz besonders bevorzugt wird in Schritt (a) die Monomerkomponente (A2) bereitgestellt, wobei die primären Aminogruppen in geschützter Form vorliegen, insbesondere durch Lösen in einem Mittel zum Schutz primärer Aminogruppen, welches gleichzeitig das Lösungsmittel (C) ist.

Unter geschützt vorliegenden primären Aminogruppen ist zu verstehen, dass die primären Aminogruppen im Wesentlichen nicht in freier Form als -NH₂ vorliegen. Die geschützt vorliegenden primären Aminogruppen der Monomerkomponente (A2) weisen eine verringerte Reaktivität gegenüber Isocyanaten auf. Vorzugsweise liegen die primären Aminogruppen durch reversible Anbindung an mindestens eine weitere funktionelle Gruppe beziehungsweise an mindestens ein weiteres Molekül (sogenannte Schutzgruppen) geschützt vor.

Unter reversibler Anbindung ist dabei zu verstehen, dass die entsprechenden funktionellen Gruppen beziehungsweise Moleküle (Schutzgruppen) zwar die Reaktivität der primären Aminogruppen gegenüber Isocyanaten vermindern, die Reaktion aber nicht vollständig unterdrücken, indem sie entweder vor der Reaktion von primären Aminogruppen mit Isocyanatgruppen gezielt abgespalten werden oder - dies ist bevorzugt - im Fortgang des Schrittes (b) des erfindungsgemäßen Verfahrens reaktive primäre Aminogruppen nachgebildet werden, was zu einer verringerten Reaktionsgeschwindigkeit zwischen primären Aminogruppen mit Isocyanatgruppen führt. Eine solche Nachbildung kann beispielsweise im Rahmen eines Gleichgewichts zwischen geschützter Form und reaktiver freier Form erfolgen.

Besonders bevorzugt liegen die primären Aminogruppen der Monomerkomponente (A2) in Schritt (b) in Form eines Ketimins und/oder eines Aldimins vor. Ganz besonders bevorzugt erfolgt das Bereitstellen der Monomerkomponente (A2) gemäß Schritt (a) des erfindungsgemäßen Verfahrens in Form eines Ketimins und/oder Aldimins.

Darunter ist zu verstehen, dass die primären Aminogruppen der Monomerkomponente (A2) zumindest teilweise, vorzugsweise vollständig, in Form einer Ketimin- und/oder Aldimingruppe vorliegen. Das Ketimin- und/oder Aldimin kann insbesondere durch Verwendung eines Ketons und/oder Aldehyds als Lösungsmittel (C) erhalten werden.

Geeignete Aldimine oder Ketimine leiten sich von Diaminen oder mehrfunktionellen Aminen mit primären Aminogruppen und Aldehyden oder Ketonen ab und können aus diesen Stoffen in an sich bekannter Weise erhalten werden, beispielsweise durch Erwärmen in einem inerten organischen Lösungsmittel, gegebenenfalls unter Entfernung des sich bildenden Wassers, gegebenenfalls katalysiert beispielsweise durch eine Säure, vorzugsweise jedoch durch Umsetzung in einem Überschuss Keton und/oder Aldehyd als Lösungsmittel. Die Aldimine oder Ketimine können darüber hinaus auch noch weitere funktionelle Gruppen enthalten, die gegenüber Isocyanat reaktiv sind, beispielsweise Hydroxyl- oder Iminogruppen.

Des Weiteren kommen Ketimine oder Aldimine in Betracht, die außer geschützten primären Aminogruppen noch freie sekundäre Aminogruppen enthalten, wie zum Beispiel das Diketimin von Diethylentriamin mit Methylisobutylketon.

Sofern die Schutzgruppe durch Zugabe eines Abspaltungsmittels vor oder während der Durchführung des Schrittes (c) abgespalten wird, kann im Fall der Aldimine und Ketimine die Schutzgruppe insbesondere durch Zugabe von Wasser als Abspaltungsmittel abgespalten werden.

Vorzugsweise werden die Aldimine und/oder Ketimine jedoch ohne vorherige Zugabe eines Abspaltungsmittels in einer verlangsamten Reaktion mit Isocyanaten in Schritt (b) des erfindungsgemäßen Verfahrens umgesetzt. Hierbei wird vorzugsweise ein Gleichgewicht zwischen freien und geschützten primären Aminogruppen im Lösungsmittel (C) ausgenutzt.

Die Umsetzungsprodukte zwischen mehrfunktionellen Aldiminen und/oder Ketiminen und Polyisocyanaten sind an sich chemisch identisch oder weitgehend identisch zu denen einer direkten Umsetzung von Aminogruppen und Isocyanatgruppen. Allerdings wird durch die Verringerung der Reaktionsgeschwindigkeit von primären aliphatischen Aminogruppen und Isocyanatgruppen insbesondere die Porenstruktur des in Schritt (b) resultierenden Gels positiv beeinflusst.

Vorzugsweise sind die reversibel mit primären Aminen reagierenden Schutzgruppen unter den Versuchsbedingungen flüssig. Vorzugsweise werden die Schutzgruppen in Form eines gegenüber primären Aminogruppen reaktiven Lösungsmittels (C) eingesetzt.

Ganz besonders bevorzugt wird in Schritt (a) die Monomerkomponente (A2) gelöst in einem Keton und/oder Aldehyd als Lösungsmittel (C) bereitgestellt und in Schritt (b) mit der Monomerkomponente (A1) vereinigt.

Aldehyde oder Ketone, die zur Herstellung der Aldimine oder Ketimine verwendet werden können sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyln-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden.

Grundsätzlich ist eine Herstellung eines Aldimins oder Ketimins vorab in Reinform sowie anschließendem Bereitstellen als Lösung in einem Lösungsmittel (C) möglich. Vorzugsweise werden im erfindungsgemäßen Verfahren die vorgenannten Aldehyde und/oder Ketone jedoch als Lösungsmittel (C) eingesetzt, wobei die Bildung des Aldimins oder Ketimins beim Lösen der Komponente (A2) erfolgt.

Es ist wünschenswert, dass der Aldehyd oder das Keton einen Siedpunkt unter etwa 180°C besitzt, so dass es aus dem Polymer während der Abbindungsstufe leicht entweichen kann.

Vorzugsweise werden die Monomerkomponenten (A1) und (A2) getrennt voneinander in einem Lösungsmittel (C), insbesondere einem Aldehyd und/oder Keton, gelöst.

Geeignete Lösungsmittel (C) sind insbesondere solche Aldehyde und/oder Ketone, in denen beide Komponenten (A1) und (A2) eine ausreichende Löslichkeit aufweisen und in denen sich durch Umsetzung mit den primären Aminogruppen der Monomerkomponente (A2) ein Aldimin und/oder Ketimin bildet, vorzugsweise bei Raumtemperatur.

Prinzipiell können die beiden Monomerkomponenten (A1) und (A2) in unterschiedlichen Lösungsmitteln (C1) und (C2) gelöst werden, sofern die Lösungsmittel vollständig miteinander mischbar sind und die beiden Komponenten (A1) und (A2) im Lösungsmittelgemisch jeweils eine ausreichende Löslichkeit aufweisen.

Als Monomerkomponente A2 können auch mehrfunktionelle Hydroxyverbindungen verwendet werden. Derartige Hydroxyverbindungen sind dem Fachmann an sich bekannt. Beispielsweise kommen Polyetherpolyole, insbesondere solche auf Basis von Ethylenoxid und/oder Propylenoxid, Polyesterpolyole oder Polyetheresterpolyole mit einer OH-Funktionalität von mindestens 2 in Betracht. Das Molekulargewicht kann über einen weiten Bereich variieren. Als derartige Polyole kommen im Prinzip alle dem Fachmann bekannte Vorstufen für Polyurethane in Betracht. Sofern als Monomerkomponente A2 mehrfunktionelle Hydroxyverbindungen verwendet werden, dann handelt es sich gemäß einer bevorzugten Ausführungsform bei den mehrfunktionellen Hydroxyverbindungen um phenolische Verbindungen, d.h. aromatische Hydroxyverbindungen. Bevorzugte mehrfunktionelle phenolische Hydroxyverbindungen sind Resorcin, Catechol, Hydrochinon und Phloroglucinol, wobei Phloroglucinol besonders bevorzugt ist.

Vorzugsweise besteht die Monomerkomponente (A2) jedoch aus mindestens einem mehrfunktionellen aromatischen Amin.

Vorzugsweise besteht die Monomerkomponente (A2) aus mindestens einem mehrfunktionellen aromatischen Amin, wovon mindestens eines ausgewählt ist aus 4,4'-Methylen-bis(2-chloranilin), 4,4'-Diaminodiphenylmethan, 2,4'-Diaminodiphenylmethan, 2,2'-Diaminodiphenylmethan und oligomerem Diaminodiphenylmethan.

Sofern als Monomerkomponente (A2) 4,4'-Diaminodiphenylmethan, 2,4'-Diaminodiphenylmethan, 2,2'-Diaminodiphenylmethan und/oder oligomeres Diaminodiphenylmethan in Mischung mit einem weiteren mehrfunktionellen aromatischen Amin eingesetzt wird, dann kommen als weitere mehrfunktionelle aromatische Amine vorzugsweise Toluoldiamin, insbesondere Toluol-2,4-diamin und/oder Toluol-2,6-diamin und Diethyltoluoldiamin, insbesondere 3,5-Diethyltoluol-2,4-diamin und/oder 3,5-Diethyltoluol-2,6-diamin sowie 4,4'-Methylen-bis(2-chloranilin) in Betracht.

Besonders bevorzugt besteht die Monomerkomponente (A2) aus mindestens einem mehrfunktionellen aromatischen Amin ausgewählt aus 4,4'-Methylen-bis(2-chloranilin), 4,4'-Diaminodiphenylmethan, 2,4'- Diaminodiphenylmethan, 2,2'- Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins, welches oligomeres MDA enthält, kann im Bereich von ungefähr 2,2 bis ungefähr 5 variieren, insbesondere von 2,3 bis 3,5 und insbesondere von 2,5 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht. Bevorzugt enthält die Monomerkomponente (A2) oligomeres Diaminodiphenylmethan und weist eine Funktionalität von mindestens 2,5 auf.

Das Einsatz-Verhältnis (Äquivalenzverhältnis) von NCO-Gruppen der Monomerkomponenten (A1) zu Aminogruppen der Monomerkomponente (A2) beträgt bevorzugt von 0,9 zu 1 bis 1,3 zu 1. Besonders bevorzugt beträgt das Äquivalenzverhältnis von NCO-Gruppen der Monomerkomponente (A1) zu reaktiven Gruppen der Monomerkomponente (A2) von 0,95 zu 1 bis 1,2 zu 1, insbesondere von 1 zu 1 bis 1,1 zu 1.

In einer bevorzugten Ausführungsform werden die Monomerkomponenten (A1) und (A2) zunächst getrennt voneinander jeweils in einem Lösungsmittel (C) bereitgestellt und schließlich zu Beginn von Schritt (b) vereinigt. Das erfindungsgemäße Verfahren umfasst demzufolge vorzugsweise folgende Schritte:
(a-1) Bereitstellen der Monomerkomponenten (A1) und (A2) getrennt voneinander jeweils in einem Lösungsmittel (C);
(a-2) Bereitstellen einer Gelvorstufe (A) enthaltend die Monomerkomponenten (A1) und (A2) in einem Lösungsmittel (C) durch Vereinigung der in Schritt (a-1) bereitgestellten Monomerkomponenten;
(b) Umsetzung der Gelvorstufe (A) in Gegenwart eines offenzelligen makroporösen Schaumstoffes und des Lösungsmittels (C) zu einem Gel;
(c) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

Die Monomerkomponenten (A1) und (A2) liegen in der Gelvorstufe (A) in monomerer Form vor oder wurden vorab durch teilweise oder nicht-äquimolare Umsetzung von Isocyanat- und Aminogruppen in ein Präpolymer umgewandelt, das gegebenenfalls mit weiteren Monomerkomponenten (A1) oder (A2) die Gelvorstufe (A) bildet. Die Gelvorstufe (A) ist somit gelierbar, das heißt sie kann durch Vernetzung in ein Gel umgesetzt werden. Die Mengenanteile der Monomerkomponenten (A1) und (A2) im Xerogel, worin sie in polymerer Form vorliegen, entsprechen den Mengenanteilen der Monomerkomponenten (A1) und (A2) in der Gelvorstufe (A), worin sie in noch nicht umgesetzter monomerer Form vorliegen.

Der Begriff Gelvorstufe (A) kennzeichnet die gelierbare Mischung aus den Komponenten (A1) und (A2). Die Gelvorstufe (A) wird anschließend in Schritt (b) in Gegenwart des Lösungsmittels (C) zu einem Gel, ein vernetztes Polymer, umgesetzt.

Es ist dem Fachmann bekannt, dass Amine, insbesondere Diamine, entstehen, wenn man Isocyanate, insbesondere Diisocyanate, mit Wasser umsetzt. Demzufolge ist es möglich, an Stelle von mehrfunktionellen Aminen entsprechende mehrfunktionelle Isocyanate und eine äquivalente Menge an Wasser als Komponente (A2) einzusetzen, so dass die gewünschte Menge an mehrfunktionellem Amin in situ oder in einer Vorabumsetzung entsteht. Bei einem Überschuss der Komponente (A1) und gleichzeitiger Zugabe von Wasser kann die Komponente (A1) in situ anteilmäßig zur Komponente (A2) umgesetzt werden, welche dann unmittelbar mit der verbleibenden Komponente (A1) unter Bildung von Harnstoff-Verknüpfungen reagiert.

Bevorzugt wird das mehrfunktionelle Amin jedoch nicht im Lösungsmittel (C) in Gegenwart der Monomerkomponente (A1) aus der Komponente (A2) erzeugt, sondern wird separat als Komponente (A2) zugegeben. Demzufolge enthält die in Schritt (a) bereitgestellte Mischung bevorzugt kein Wasser.

### Schritt (b)

Erfindungsgemäß erfolgt gemäß Schritt (b) die Umsetzung der Gelvorstufe (A) in Gegenwart eines offenzelligen makroporösen Schaumstoffes (B) und eines Lösungsmittels (C) zu einem Gel.

Makroporös bedeutet im Rahmen der vorliegenden Erfindung, dass der mittlere Porendurchmesser mehr als 1 Mikrometer (1000 nm), bevorzugt mehr als 10 Mikrometer, besonders bevorzugt mehr als 50 Mikrometer beträgt, bestimmt durch Quecksilberintrusionsmessung nach DIN 66133. Der so bestimmte Wert ist ein volumengewichteter mittlerer Porendurchmesser.

Die Quecksilber-Intrusionsmessung nach DIN 66133 ist eine porosimetrische Methode und erfolgt üblicherweise in einem Porosimeter. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung bestimmen.

Offenzellig bedeutet bei Schäumen, dass die Mehrzahl der Schaumzellen nicht geschlossen, sondern miteinander verbunden ist. Der Volumenanteil der Poren, die nicht miteinander verbunden, sondern geschlossen sind (nicht-offenzelliger oder geschlossenzelliger Anteil) beträgt bei offenzelligen Schäumen bevorzugt weniger als 50 Vol.-%. Besonders bevorzugt beträgt der nicht-offenzellige Volumenanteil der Poren bei offenzelligen Schäumen höchstens 30 Vol.-%, beispielsweise höchstens 20 Vol.-%, und insbesondere höchstens 10 Vol.-%.

Unter dem mittleren Porendurchmesser ist im Falle der offenzelligen Schäume vorzugsweise die mittlere Größe der durch Wände und/oder Stege begrenzten Poren zu verstehen. Die Bestimmung des mittleren Porendurchmessers erfolgt als volumengewichteter Mittelwert mittels Quecksilberintrusionsmessung nach DIN 66133, worauf sich die in dieser Erfindung angegebenen Porendurchmesser der unbeschichteten Substrate beziehen. Geeignete Schaumstoffe haben vor der Umsetzung je nach chemischer Zusammensetzung (siehe weiter unten) üblicherweise eine Dichte von 5 bis 500, bevorzugt 10 bis 300 und besonders bevorzugt 15 bis 200 g/dm³, bestimmt nach DIN EN ISO 845.

Die intrinsische Oberfläche der Schaumstoffe vor der Umsetzung beträgt in der Regel bis zu 30 m²/g, beispielsweise von 1 bis 20 m²/g, ermittelt mittels Gasadsorption nach dem BET (Brunauer, Emmet, Teller-Verfahren gemäß DIN 66131.

Chemisch betrachtet ist der Schaumstoff (B) aufgebaut auf Basis mindestens eines organischen Polymers. Dabei bedeutet "auf Basis" bzw. "auf Basis von" einen Anteil von mindestens 50 Gew.-%, bevorzugt mindestens 60, besonders bevorzugt mindestens 70 und insbesondere mindestens 80 Gew.-% am Substrat.

Prinzipiell kommen als Schaumstoff (B) alle organischen Polymere in Betracht, die zu einem Schaum verarbeitet werden können. Wird der Schaumstoff (B) ausgewählt aus Amino-Aldehyd-Harzen, Phenol-Aldehyd-Harzen, Polystyrol, Polyvinylchlorid, Polyurethanen, Polyamiden, Polyestern, Polyolefinen und Cellulose.

Vorzugsweise ist der offenzellige makroporöse Schaumstoff auf Basis von Aminoplast, insbesondere Melamin-Formaldehyd aufgebaut. Derartige Schaumstoffe sind dem Fachmann bekannt oder können nach bekannten Methoden hergestellt werden. Entsprechende Schaumstoffe auf Basis von Melamin-Formaldehyd sind beispielsweise Basotect® der BASF SE.

Die Rohdichte des offenzelligen Schaumstoffes liegt in der Regel im Bereich von 3 bis 100 g/l, bevorzugt im Bereich von 5 bis 20 g/l. Die Zellzahl liegt üblicherweise im Bereich von 50 bis 300 Zellen/25 mm. Die Zugfestigkeit liegt bevorzugt im Bereich von 100 bis 150 kPa und die Bruchdehnung im Bereich von 8 bis 20%.

Zur Herstellung eines offenzelligen Schaumstoffes auf Basis des als Aminoplast bevorzugten Melamin/Formaldehyd (MF)-Harzes kann nach EP-A 071 672 oder EP-A 037 470 eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet werden.

Das Molverhältnis Melamin zu Formaldehyd ist in der Regel kleiner als 1 : 1,0, es liegt bevorzugt zwischen 1 : 1 und 1 : 5, insbesondere zwischen 1 : 1,3 und 1 : 1,8. Es hat sich gezeigt, dass ein relativ hoher Sulfitgruppengehalt bei konstantem Melamin zu Formaldehyd-Verhältnis eine höhere Formaldehyd-Emission des Schaumstoffs zur Folge hat. Das eingesetzte Vorkondensat sollte deshalb praktisch keine Sulfitgruppen enthalten, d.h., der Sulfitgruppengehalt sollte unter 1 %, vorzugsweise unter 0,1 % und insbesondere 0 % betragen.

Ohne Behandlung ist der Melamin-Schaumstoff hydrophil und lässt sich leicht zerbröseln. Er kann durch chemische Modifizierung oder Nachbehandlung hydrophob und/oder mit verstärkenden Komponenten, wie in DE-A 10 2007 009127 beschrieben, formstabiler gemacht werden.

Die Kombination aus Xerogelen aus Polyharnstoff und Schaumstoffen aus Melamin-Formaldehyd führt zu Xerogel-Kompositen mit besonders günstiger Porosität und Dichte.

Als Lösungsmittel (C) kommen prinzipiell eine organische Verbindung oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (b) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für beide Komponenten, (A1) und (A2) sind, d. h. solche, die die Komponenten (A1) und (A2) unter Reaktionsbedingungen weitgehend vollständig lösen, so dass der Gehalt der organischen Gelvorstufe (A) in der gesamten in Schritt (a) bereitgestellten Mischung einschließlich des Lösungsmittels (C) bevorzugt mindestens 5 Gew.-% beträgt. Bevorzugt ist das Lösungsmittel (C) gegenüber Komponente (A1) inert, d. h. nicht reaktiv.

Als Lösungsmittel (C) kommen beispielsweise Ketone, Aldehyde, Alkylalkanoate, Amide wie Formamid und N-Methylpyrrolidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl- Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel (C) sind außerdem Alkylalkanoate geeignet, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere die oben im Rahmen der Aldimin- und/oder Ketiminbildung beschriebenen. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel (C) bevorzugt. Besonders bevorzugt ist Aceton.

Dialkylether, zyklische Ether, Ketone und Ester sind als Lösungsmittel (C) ganz besonders bevorzugt.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Die Gelvorstufe (A) kann nach üblichen Mitteln mit dem Schaumstoff (B) in Kontakt gebracht werden. Es ist bevorzugt, den Schaumstoff (B) mit der Gelvorstufe (A) zu tränken und insbesondere den Schaumstoff (B) in die Gelvorstufe (A), die im Lösungsmittel (C) gelöst vorliegt, einzutauchen. Wesentlich ist, dass eine vollständige Benetzung der zugänglichen Poren des Schaumstoffes (B) gewährleistet ist. Im Rahmen der Umsetzung in Schritt (b) entsteht das erfindungsgemäße Xerogel-Komposit oder eine Vorstufe desselben, wobei das Xerogel-Komposit oder dessen Vorstufe noch Lösungsmittel (C) enthält, insbesondere im Xerogel-Anteil des Komposits.

Das Xerogel-Komposit besteht somit aus einem Gel-Anteil und dem Schaumstoff (B), welcher eine tragende und stabilisierende Matrix für das Xerogel bildet. Durch die offenzellige Struktur bildet sich das Komposit in Form eines interpenetrierenden Netzwerkes. Im Folgenden wird auf den Gelanteil des Komposits durch den Begriff "Gel" Bezug genommen.

Um in Schritt (b) ein Gel mit stabilen mechanischen Eigenschaften zu erhalten sollte der Anteil der Gelvorstufe (A) an der gesamten, in Schritt (a) des erfindungsgemäßen Verfahrens bereitgestellten Mischung im Allgemeinen nicht weniger als 5 Gew.-% betragen. Bevorzugt beträgt der Anteil der Gelvorstufe (A) an der gesamten, in Schritt (a) des erfindungsgemäßen Verfahrens bereitgestellten Mischung einschließlich des Lösungsmittels (C) mindestens 6 Gew.-%, besonders bevorzugt mindestens 8 Gew.-%, insbesondere mindestens 10 Gew.-%.

Andererseits darf die Konzentration der Gelvorstufe (A) in der bereitgestellten Mischung nicht zu hoch gewählt werden, da ansonsten kein Xerogel mit günstigen Eigenschaften erhalten wird. Im Allgemeinen beträgt der Anteil der Gelvorstufe (A) an der gesamten, in Schritt (a) des erfindungsgemäßen Verfahrens bereitgestellten Mischung höchstens 40 Gew.-%. Bevorzugt beträgt der Anteil der Gelvorstufe (A) an der gesamten, in Schritt (a) des erfindungsgemäßen Verfahrens bereitgestellten Mischung einschließlich des Lösungsmittels (C) höchstens 35 Gew.-%, besonders bevorzugt höchstens 25 Gew.-%, insbesondere höchstens 20 Gew.-%.

Optional enthält die in Schritt (a) bereitgestellte Mischung als weitere Komponente (B) noch mindestens einen Katalysator (b1). Vorzugsweise wird die Umsetzung der Gelvorstufe (A) jedoch ohne Anwesenheit eines Katalysators durchgeführt.

Sofern ein Katalysator (b1) eingesetzt wird, werden üblicherweise Trimerisationskatalysatoren verwendet, welche die Bildung von Isocyanuraten katalysieren, oder - sofern als Monomerkomponente (A2) Hydroxyverbindungen zum Einsatz kommen - Katalysatoren, welche die Bildung von Polyurethanen katalysieren. Als solche Trimerisationskatalysatoren können zum Beispiel dem Fachmann weitläufig bekannte, zum Beispiel die im Folgenden ausgeführten, verwendet werden. Polyurethankatalysatoren sind dem Fachmann ebenfalls bekannt.

Sofern Trimerisationskatalysatoren als Komponente (b1) eingesetzt werden, sind bekannte Katalysatoren wie quaternäre Ammoniumhydroxide, Alkalimetall- und Erdalkalimetallhydroxide, -alkoxide und -carboxylate, z.B. Kaliumacetat und Kalium-2-ethylhexanoat, bestimmte tertiäre Amine und nicht-basische Metallcarboxylate, z.B. Bleioktoat und Triazinderivate, insbesondere symmetrische Triazinderivate, geeignet. Triazinderivate sind als Trimerisationskatalysatoren besonders geeignet.

Die Komponenten (A1) und (A2) werden bevorzugt so eingesetzt, dass die Gelvorstufe (A) von 30 bis 90 Gew.-% der Komponente (A1) und von 10 bis 70 Gew.-% der Komponente (A2) enthält. Bevorzugt enthält die Gelvorstufe (A) von 40 bis 80 Gew.-% der Komponente (A1) und von 20 bis 60 Gew.-% der Komponente (A2). Besonders bevorzugt enthält die Gelvorstufe (A) von 50 bis 70 Gew.-% der Komponente (A1) und von 30 bis 50 Gew.-% der Komponente (A2).

Die in Schritt (a) bereitgestellte Mischung kann außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Das Bereitstellen der Zusammensetzung gemäß Schritt (a) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

In Schritt (b) des erfindungsgemäßen Verfahrens wird die organische Gelvorstufe (A) in einer Gelierungsreaktion in Gegenwart des Schaumstoffes (B) zu einem Xerogel-Komposit umgesetzt, welches den oben beschriebenen Gel-Anteil aufweist. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Dauer des Gelierens variiert je nach Art und Menge der eingesetzten Komponenten und der Temperatur und kann mehrere Tage betragen. Üblicherweise beträgt sie von 1 Minute bis 10 Tage, bevorzugt weniger als 1 Tag, insbesondere von 5 Minuten bis 12 Stunden, besonders bevorzugt höchstens 1 Stunde, insbesondere von 5 Minuten bis 1 Stunde.

Die Gelierung kann dabei ohne Wärmezuführung bei einer Temperatur im Bereich der Raumtemperatur durchgeführt werden, insbesondere von 15 bis 25°C, oder bei einer gegenüber der Raumtemperatur erhöhten Temperatur, die 20°C oder mehr beträgt, insbesondere von 25°C bis 80°C. Üblicherweise verkürzt eine höhere Gelierungstemperatur die Dauer der Gelierung. Eine höhere Gelierungstemperatur ist jedoch nicht in allen Fällen vorteilhaft, da eine erhöhte Gelierungstemperatur zu Gelen mit unzureichenden mechanischen Eigenschaften führen kann. Vorzugsweise wird die Gelierung bei einer Temperatur im Bereich der Raumtemperatur durchgeführt, insbesondere von 15°C bis 25°C.

Der Druck beim Gelieren kann in einem weiten Bereich variieren und ist im Allgemeinen nicht kritisch. Er kann beispielsweise von 0,1 bar bis 10 bar betragen, bevorzugt 0,5 bar bis 8 bar und insbesondere 0,9 bis 5 bar (jeweils absolut). Insbesondere kann man wässrige Mischungen bei Raumtemperatur und Atmosphärendruck gelieren lassen.

In einer bevorzugten Ausführungsform wird das bei der Gelierung in Schritt (b) erhaltene Gel vor der Durchführung von Schritt (c) noch einer sogenannten Alterung unterworfen, bei der sich die Ausbildung des Gels vervollständigt. Die Alterung erfolgt insbesondere dadurch, dass man das Gel einige Zeit einer höheren Temperatur aussetzt als bei der vorangegangenen Gelierung. Dazu kann man beispielsweise ein Temperierbad oder einen Wärmeschrank verwenden oder die Vorrichtung oder Umgebung, in der sich das Gel befindet, in geeigneter Weise erwärmen.

Die Temperatur bei der Alterung kann in einem weiten Bereich variieren und ist an sich nicht kritisch. Im Allgemeinen altert man bei Temperaturen von 30°C bis 150°C, bevorzugt von 40°C bis 100°C. Die Alterungs-Temperatur sollte im Bereich von 10°C bis 100°C, insbesondere von 20°C bis 80°C über der Gelierungstemperatur liegen. Wurde bei Raumtemperatur geliert, so kann man insbesondere bei Temperaturen von 40°C bis 80°C, bevorzugt bei etwa 60°C altern. Der Druck bei der Alterung ist unkritisch und beträgt üblicherweise von 0,9 bis 5 bar (absolut).

Die Dauer der Alterung ist abhängig von der Art des Gels und kann wenige Minuten dauern, aber auch lange Zeit in Anspruch nehmen. Die Dauer der Alterung kann beispielsweise bis zu 30 Tagen betragen. Üblicherweise beträgt die Dauer der Alterung von 10 Minuten bis 12 Stunden, bevorzugt von 20 Minuten bis 6 Stunden und besonders bevorzugt von 30 Minuten bis 5 Stunden.

### Schritt (c)

Erfindungsgemäß wird in Schritt (c) das im vorigen Schritt erhaltene Xerogel-Komposit durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit getrocknet.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Folglich bringt man nach Schritt (b) das Xerogel-Komposit bevorzugt nicht mit einer organischen Flüssigkeit in Kontakt, um das im Gel, insbesondere in den Poren des Gels, enthaltene Lösungsmittel (C), gegen diese organische Flüssigkeit auszutauschen. Dies gilt unabhängig davon, ob das Gel gealtert wird oder nicht. Indem ein Lösungsmitteltausch unterbleibt, lässt sich das Verfahren besonders einfach und kostengünstig durchführen. Sofern jedoch ein Lösungsmitteltausch durchgeführt wird, ist es bevorzugt, das Lösungsmittel (C) gegen ein unpolares Lösungsmittel auszutauschen, insbesondere gegen Kohlenwasserstoffe wie Pentan.

Für die Trocknung durch Überführung der im Xerogel-Komposit enthaltenen Flüssigkeit, bevorzugt das Lösungsmittel (C), in den gasförmigen Zustand kommen grundsätzlich sowohl Verdunstung als auch Verdampfung, jedoch nicht die Sublimation, in Betracht. Das Trocknen durch Verdunstung oder Verdampfung schließt insbesondere das Trocknen unter Atmosphärendruck, das Trocknen im Vakuum, das Trocknen bei Raumtemperatur und das Trocknen bei erhöhter Temperatur, jedoch nicht das Gefriertrocknen, ein. Erfindungsgemäß trocknet man bei einem Druck und einer Temperatur, die unterhalb des kritischen Druckes und unterhalb der kritischen Temperatur der im Xerogel-Komposit enthaltenen Flüssigkeit liegen. In Schritt (c) des erfindungsgemäßen Verfahrens trocknet man somit das lösungsmittelhaltige Xerogel-Komposit, wobei als Verfahrensprodukt das fertige Xerogel-Komposit entsteht.

Zum Trocknen des Xerogel-Komposits öffnet man üblicherweise die Geliervorrichtung und hält das Gel solange unter den genannten Druck- und Temperaturbedingungen, bis die flüssige Phase durch Übergang in den gasförmigen Zustand entfernt ist, d.h. man verdunstet beziehungsweise verdampft die flüssige Phase. Um das Verdunsten zu beschleunigen, ist es häufig vorteilhaft, das Xerogel-Komposit aus dem Behälter zu entfernen. Auf diese Weise wird die Phasengrenzfläche Gel/Umgebungsluft, worüber die Verdunstung und/oder Verdampfung stattfindet, vergrößert. Beispielsweise kann man das Xerogel-Komposit zum Trocknen auf eine ebene Unterlage oder ein Sieb geben. Als Trocknungsverfahren kommen außerdem die dem Fachmann geläufigen Trocknungsverfahren wie Konvektionstrocknung, Mikrowellentrocknung, Vakuumtrockenschränke oder Kombinationen dieser Verfahren in Betracht.

Man kann das Xerogel-Komposit an der Luft, oder falls es sauerstoffempfindlich ist, auch an anderen Gasen wie Stickstoff oder Edelgasen trocknen, und dazu gegebenenfalls einen Trockenschrank oder andere geeignete Vorrichtungen verwenden, in denen sich der Druck, die Temperatur sowie der Lösungsmittelgehalt der Umgebung kontrollieren lässt.

Die beim Trocknen zu wählenden Temperatur- und Druckbedingungen hängen unter anderem von der Natur der im Gel-Teil vorhandenen Flüssigkeit ab. Erfindungsgemäß wird bei einem Druck getrocknet, der unter dem kritischen Druck pₖᵣᵢₜ der im Xerogel-Komposit vorhanden Flüssigkeit, bevorzugt das Lösungsmittel (C) liegt, und bei einer Temperatur getrocknet, die unter der kritischen Temperatur Tₖᵣᵢₜ liegt. Man trocknet demnach unter sub-kritischen Bedingungen. Dabei bedeutet kritisch: beim kritischen Druck und der kritischen Temperatur ist die Dichte der flüssigen Phase gleich der Dichte der Gasphase (sog. kritische Dichte), und bei Temperaturen oberhalb Tₖᵣᵢₜ lässt sich die fluide Phase auch bei Anwendung höchster Drücke nicht mehr verflüssigen.

Setzt man als Lösungsmittel Aceton ein, so trocknet man bei Temperaturen von 0°C bis 150°C, bevorzugt 10°C bis 100°C und besonders bevorzugt 15°C bis 80°C, und bei Drücken von Hochvakuum, beispielsweise von 10⁻³ mbar bis 5 bar, bevorzugt 1 mbar bis 3 bar und insbesondere 10 mbar bis ungefähr 1 bar (absolut). Beispielsweise kann man bei Atmosphärendruck und von 0°C bis 80°C, insbesondere bei Raumtemperatur, trocknen. Besonders bevorzugt trocknet man in Schritt (c) das Xerogel-Komposit bei einem Druck von 0,5 bis 2 bar (absolut), und bei einer Temperatur von 0 bis 100°C. Andere im Xerogel-Komposit vorhandene Flüssigkeiten, insbesondere andere Lösungsmittel (C) als Aceton erfordern Anpassungen der Trocknungsbedingungen (Druck, Temperatur, Zeit), die der Fachmann durch einfache Versuche ermitteln kann.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Lösungsmittels (C) zunächst bei Raumtemperatur und Atmosphärendruck innerhalb von 30 min bis 3 Stunden entfernen, und danach das Xerogel-Komposit bei 40 bis 80°C unter einem Vakuum von 1 bis 100 mbar, insbesondere 5 bis 30 mbar, innerhalb von 10 min bis 6 Stunden trocknen. Selbstverständlich sind auch längere Trocknungszeiten möglich, beispielsweise von 1 bis 5 Tagen. Bevorzugt sind jedoch häufig Trocknungszeiten von unter 12 Stunden.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. gemäß eines Druck- bzw. Temperaturprogramms trocknen. Naturgemäß trocknet das Xerogel-Komposit umso schneller, je geringer der Feuchtigkeitsgehalt der Luft ist. Gleiches gilt sinngemäß für andere flüssige Phasen als Wasser und andere Gase als Luft.

Die bevorzugten Trocknungsbedingungen hängen nicht nur vom Lösungsmittel, sondern auch von der Natur des Xerogel-Komposits ab, insbesondere die Stabilität des Netzwerkes im Verhältnis zu den bei der Trocknung wirkenden Kapillarkräften.

Beim Trocknen in Stufe (c) wird die flüssige Phase in der Regel vollständig oder bis auf einen Restgehalt von 0,01 bis 1 Gew.-%, bezogen auf das erhaltene Xerogel-Komoposit, entfernt.

Sofern auf Xerogele beziehungsweise dessen Eigenschaften oder Zusammensetzung Bezug genommen wird, ist darunter der Bestandteil der erfindungsgemäßen Xerogel-Komposite zu verstehen, der aus dem Xerogel besteht.

Das nach dem erfindungsgemäßen Verfahren erhältliche Xerogel-Komposit weist vorzugsweise einen volumengewichteten mittleren Porendurchmesser von höchstens 30 Mikrometer, insbesondere höchstens 20 Mikrometer, besonders bevorzugt höchstens 10 Mikrometer auf.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles Material zu erhalten, ergibt sich jedoch eine praktische untere Grenze des volumengewichteten mittleren Porendurchmessers. Im Allgemeinen beträgt der volumengewichtete mittlere Porendurchmesser mindestens 200 nm, vorzugsweise mindestens 400 nm. In vielen Fällen beträgt der volumengewichtete mittlere Porendurchmesser mindestens 500 nm, insbesondere mindestens 1 Mikrometer.

Bevorzugt weist das erfindungsgemäße Xerogel-Komposit eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Xerogel-Komposits aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Xerogels nach oben begrenzt.

Erfindungsgemäß liegen die Monomerkomponenten (A1) und (A2), im Folgenden Komponenten (A1) und (A2) genannt, im Xerogel in polymerer Form vor. Aufgrund der erfindungsgemäßen Zusammensetzung liegen die Komponenten (A1) und (A2) im Xerogel überwiegend über Harnstoffverknüpfungen gebunden vor. Eine weitere mögliche Verknüpfung im Xerogel sind Isocyanurat-Verknüpfungen, die durch Trimerisation von Isocyanatgruppen der Komponente (A1) entstehen. Sofern das Xerogel weitere Monomerkomponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (A1) und (A2) im Xerogel zu mindestens 50 mol-% durch Harnstoffgruppen -NH-CO-NH- verknüpft vor. Vorzugsweise liegen die Komponenten (A1) und (A2) im Xerogel von 50 bis 100 mol-% durch Harnstoffgruppen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, insbesondere als Isocyanurat-Verknüpfungen. Die weiteren Verknüpfungen können jedoch auch in Form anderer, dem Fachmann bekannter Verknüpfungen von Isocyanat-Polymeren vorliegen. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerkomponenten im Xerogel erfolgt mittels NMR-Spektroskopie (Kernspinresonanz) im Festkörper oder in gequollenem Zustand. Geeignete Bestimmungsmethoden sind dem Fachmann bekannt.

Bevorzugt enthält das Xerogel von 40 bis 80 Gew.-% der Monomerkomponente (A1) und von 20 bis 70 Gew.-% der Monomerkomponente (A2). Besonders bevorzugt enthält das Xerogel von 50 bis 70 Gew.-% der Monomerkomponente (A1) und von 30 bis 50 Gew.-% der Monomerkomponente (A2).

Die Dichte der gemäß des erfindungsgemäßen Verfahrens erhältlichen organischen Xerogel-Komposite beträgt üblicherweise 20 bis 600 g/l, bevorzugt 50 bis 500 g/l und besonders bevorzugt 70 bis 400 g/l).

Die erfindungsgemäßen Xerogel-Komposite und die durch das erfindungsgemäße Verfahren erhältlichen Xerogel-Komposite weisen eine geringe Wärmeleitfähigkeit, eine hohe Porosität und eine geringe Dichte auf. Die Xerogel-Komposite weisen erfindungsgemäß eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen Xerogele als Dämmstoff.

Darüber hinaus werden durch die geringe thermische Leitfähigkeit der erfindungsgemäßen Xerogel-Komposite Anwendungen bei Drücken von 1 bis 100 mbar und insbesondere von 10 mbar bis 100 mbar möglich. Das Eigenschaftsprofil der erfindungsgemäßen Xerogel-Komposite eröffnet insbesondere Anwendungen, bei denen eine lange Lebensdauer der Vakuumpaneele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäßen Xerogel-Komposite und die durch das erfindungsgemäße Verfahren erhältlichen Xerogel-Komposite weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ+ Vₛ)) * 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte p des porösen Materials in der Einheit g/ml wurde gemäß der Formel p = 1 / (Vᵢ + Vₛ) berechnet. Als spezifisches Volumen für poröse Materialien auf Basis von Melamin und Formaldehyd wurde der Wert 1 / Vₛ = 1,68 g/ml und als spezifisches Volumen für poröse Materialien auf Basis von Isocyanat wurde der Wert 1 / Vₛ = 1,38 g/ml verwendet. Beide Werte wurden durch He-Pyknometrie bestimmt.

Die thermische Leitfähigkeit λ wird mittels des dynamischen Hitzdraht-Verfahrens bestimmt. Beim Hitzdraht-Verfahren wird in die zu untersuchende Probe ein dünner Draht eingebettet, der gleichzeitig als Heizelement und Temperatursensor dient. Als Drahtmaterial wurde ein Platin-Draht mit einem Durchmesser von 100 Mikrometer und einer Länge von 40 mm eingesetzt, der zwischen zwei Hälften des jeweiligen Probenkörpers eingebettet wurde. Der Messaufbau aus Probe und Hitzdraht wurde in einen evakuierbaren Rezipienten präpariert, in dem nach dem Evakuieren der gewünschte Druck durch Belüften mit gasförmigem Stickstoff eingestellt wurde.

Während des Experiments wurde der Draht mit konstanter Leistung beheizt. Die Temperatur betrug 25°C. Die zeitliche Entwicklung des sich am Ort des Hitzdrahtes ergebenden Temperaturanstieges wurde durch Messung des Widerstandes erfasst. Die Wärmeleitfähigkeit wurde durch Anpassung einer analytischen Lösung unter Berücksichtigung eines thermischen Kontaktwiderstandes zwischen Probe und Draht sowie axialer Wärmeverluste an die zeitliche Temperaturentwicklung gemäß H.-P. Ebert et al., High Temp.-High. Press, 1993, 25, 391-401 bestimmt. Die Bestimmung des Gasdrucks erfolgte mit zwei kapazitiven Drucksensoren mit unterschiedlichen Messbereichen (0,1 bis 1000 mbar und 0,001 bis 10 mbar).

### Beispiel 1

0,72 g Lupranat® M200R, einem oligomeren MDI mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,65 g Aceton in einem Becherglas gelost. 0,52 g 4,4'-Diaminodiphenylmethan wurden in 5,70 g Aceton in einem zweiten Becherglas gelöst. Die beiden Lösungen aus Schritt (a) wurden gemischt. Man erhielt eine klare, niedrigviskose Mischung, in die 0,12 g eines Schaums aus Melamin-Formaldehyd-Harz eingetaucht wurden. Es wurde der Schaum Basotect von BASF verwendet. Der Schaum war zylinderförmig und wurde vollständig von der Mischung bedeckt. Man ließ im eingetauchten Zustand 24 Stunden bei Raumtemperatur zur Aushärtung stehen. Anschließend wurde das in (c) erhaltene Gel aus dem Becherglas genommen und die Flüssigkeit (Aceton) durch 7 Tage langes Trocknen bei 20°C entfernt.

Das erhaltene Material hatte ein Porenvolumen von 7,9 ml/g und einen durchschnittlichen Porendurchmesser von 9,1 µm. Die Porosität betrug 91 Vol.-% mit einer entsprechenden Dichte von 115 g/l.

Das erhaltene Material wies eine thermische Leitfähigkeit λ von 33,2 mW/m*K bei 26,6°C auf.

### Beispiel 1 V

0,72 g Lupranat® M200R mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,65 g Aceton in einem Becherglas gelöst. 0,52 g 4,4'-Diaminodiphenylmethan wurden in 5,70 g Aceton in einem zweiten Becherglas gelöst. Die beiden Lösungen aus Schritt (a) wurden gemischt. Man erhielt eine klare, niedrigviskose Mischung. Die Mischung aus (b) wurde 24 Stunden bei Raumtemperatur ausgehärtet. Anschließend wurde das in (c) erhaltene Gel aus dem Becherglas genommen und die Flüssigkeit (Aceton) durch 7 Tage langes Trocknen bei 20°C entfernt.

Das erhaltene Material hatte ein Porenvolumen von 4,2 ml/g und einen durchschnittlichen Porendurchmesser von 2,2 µm. Die Porosität betrug 86 Vol.-% mit einer entsprechenden Dichte von 199 g/l.

Das erhaltene Material wies eine thermische Leitfähigkeit λ von 36,2 mW/m*K bei 26,6°C auf.

### Beispiel 2

0,76 g Lupranat® M200R mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,4 g Aceton in einem Becherglas gelöst. 0,75 g 4,4'-Methylen-bis(2-chloranilin) wurden in 5,5 g Aceton in einem zweiten Becherglas gelöst. Die beiden Lösungen aus Schritt (a) wurden gemischt. Man erhielt eine klare, niedrigviskose Mischung, in die 0,12 g eines Schaums aus Melamin-Formaldehyd-Harz eingetaucht wurden. Es wurde der Schaum Basotect von BASF verwendet. Der Schaum war zylinderförmig und wurde vollständig von der Mischung bedeckt. Man ließ im eingetauchten Zustand 24 Stunden bei Raumtemperatur zur Aushärtung stehen. Anschließend wurde das in (c) erhaltene Gel aus dem Becherglas genommen und die Flüssigkeit (Aceton) durch 7 Tage langes Trocknen bei 20°C entfernt.

Das erhaltene Material hatte eine Porosität von 91 Vol.-% mit einer entsprechenden Dichte von 110 g/l.

Das erhaltene Material wies eine thermische Leitfähigkeit λ von 32 mW/m*K bei 26,6°C a uf.

### Beispiel 2V

0,76 g Lupranat® M200R mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,4 g Aceton in einem Becherglas gelost. 0,75 g 4,4'-Methylen-bis(2-chloranilin) wurden in 5,5 g Aceton in einem zweiten Becherglas gelöst. Die beiden Lösungen aus Schritt (a) wurden gemischt. Man erhielt eine klare, niedrigviskose Mischung. Die Mischung aus (b) wurde 24 Stunden bei Raumtemperatur ausgehärtet. Es entstand kein Gel, sondern ein Präzipitat. Die Flüssigkeit (Aceton) wurde durch 7 Tage langes Trocknen bei 20°C entfernt.

Es konnte keine thermische Leitfähigkeit gemessen werden.

### Beispiel 3

1,13 g Lupranat® M200R mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,1 g Aceton in einem Becherglas gelöst. 1,11 g 4,4'-Methylenebis(2-chloraniline) wurden in 5,1 g Aceton in einem zweiten Becherglas gelöst. Die beiden Lösungen aus Schritt (a) wurden gemischt. Man erhielt eine klare, niedrigviskose Mischung, in die 0,12 g eines Schaums aus Melamin-Formaldehyd-Harz eingetaucht wurden. Es wurde der Schaum Basotect von BASF verwendet. Der Schaum war zylinderförmig und wurde vollständig von der Mischung bedeckt. Man ließ im eingetauchten Zustand 24 Stunden bei Raumtemperatur zur Aushärtung stehen. Anschließend wurde das in (c) erhaltene Gel aus dem Becherglas genommen und die Flüssigkeit (Aceton) durch 7 Tage langes Trocknen bei 20°C entfernt.

Das erhaltene Material hatte eine Porosität von 89 Vol.-% mit einer entsprechenden Dichte von 140 g/l.

Das erhaltene Material wies eine thermische Leitfähigkeit λ von 34,9 mW/m*K bei 26,6°C auf.

### Beispiel 3V

1,13 g Lupranat® M200R mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 5,1 g Aceton in einem Becherglas gelost. 1,11 g 4,4'-Methylenebis(2-chloraniline) wurden in 5,1 g Aceton in einem zweiten Becherglas gelöst. Die beiden Lösungen aus Schritt (a) wurden gemischt. Man erhielt eine klare, niedrigviskose Mischung. Die Mischung aus (b) wurde 24 Stunden bei Raumtemperatur ausgehärtet. Anschließend wurde das in (c) erhaltene Gel aus dem Becherglas genommen und die Flüssigkeit (Aceton) durch 7 Tage langes Trocknen bei 20°C entfernt.

Das erhaltene Material hatte eine Porosität von 85 Vol.-% mit einer entsprechenden Dichte von 200 g/l.

Das erhaltene Material wies eine thermische Leitfähigkeit λ von 40,4 mW/m*K bei 26,6°C auf.

## Patentansprüche

1. Verfahren zur Herstellung von Xerogel-Kompositen umfassend:
(a) Bereitstellen einer Zusammensetzung enthaltend eine organische Gelvorstufe (A) umfassend eine Monomerkomponente (A1) aus mindestens einem mehrfunktionellen Isocyanat und eine Monomerkomponente (A2) aus mindestens einer Verbindung ausgewählt aus mehrfunktionellen Aminen und mehrfunktionellen Hydroxyverbindungen;
(b) Umsetzung der Gelvorstufe (A) in Gegenwart eines offenzelligen makroporösen Schaumstoffes (B) und eines Lösungsmittels (C) zu einem Xerogel-Komposit;
(c) Trocknen des Xerogel-Komposits durch Überführung des Lösungsmittels (C) in den gasförmigen Zustand bei einer Temperatur und einem Druck unterhalb der kritischen Temperatur und des kritischen Drucks des Lösungsmittels (C).

2. Verfahren nach Anspruch 1, wobei die Monomerkomponente (A2) aus mindestens einem mehrfunktionellen aromatischen Amin besteht.

3. Verfahren nach Anspruch 1 oder 2, wobei die Monomerkomponente (A2) aus mindestens einem mehrfunktionellen aromatischen Amin ausgewählt aus 4,4'-Methylen-bis(2-chloranilin), 4,4'-Diaminodiphenylmethan, 2,4'-Diaminodiphenylmethan, 2,2'-Diaminodiphenylmethan und oligomerem Diaminodiphenylmethan besteht.

4. Verfahren nach den Ansprüchen 1 bis 3, wobei Monomerkomponente (A1) ausgewählt wird aus 2,2'-Diphenylmethandiisocyanat, 2,4'-Diphenylmethandiisocyanat, 4,4'-Diphenylmethandiisocyanat, oligomerem Diphenylmethandiisocyanat und Mischungen der vorgenannten Verbindungen.

5. Verfahren nach den Ansprüchen 1 bis 4, wobei Monomerkomponente (A1) oligomeres Diphenylmethandiisocyanat mit einer Funktionalität von mindestens 2,5 ist.

6. Verfahren nach den Ansprüchen 1 bis 5, wobei die Komponenten (A1) und (A2) jeweils eine Funktionalität von mindestens zwei aufweisen und die Summe aus der Funktionalität der Komponente (A1) und der Funktionalität der Komponente (A2) mindestens 4,5 beträgt.

7. Verfahren nach den Ansprüchen 1 bis 6, wobei der offenzellige makroporöse Schaumstoff (B) eine volumenmittlere Porengröße von 20 bis 1000 Mikrometer aufweist.

8. Verfahren nach den Ansprüchen 1 bis 7, wobei der offenzellige makroporöse Schaumstoff (B) auf Basis von Reaktiv-Polykondensationsharzen aufgebaut ist.

9. Verfahren nach den Ansprüchen 1 bis 8, wobei der offenzellige makroporöse Schaumstoff (B) ein Melamin-Formaldehyd-Schaumstoff ist.

10. Xerogel-Komposite erhältlich gemäß den Ansprüchen 1 bis 9.

11. Verwendung der Xerogel-Komposite gemäß Anspruch 10 als Dämmstoff.

12. Verwendung der Xerogel-Komposite gemäß Anspruch 10 zur thermischen Isolation.

13. Verwendung von Xerogel-Kompositen gemäß Anspruch 10 für Vakuumisolationspaneele.

14. Verwendung der Xerogel-Komposite gemäß Anspruch 10 in Kühlgeräten oder in Gebäuden.

## Claims

1. A process for producing xerogel composites, which comprises:
(a) provision of a composition comprising an organic gel precursor (A) comprising a monomer component (A1) composed of at least one polyfunctional isocyanate and a monomer component (A2) composed of at least one compound selected from among polyfunctional amines and polyfunctional hydroxy compounds;
(b) reaction of the gel precursor (A) in the presence of an open-celled macroporous foam (B) and a solvent (C) to form a xerogel composite;
(c) drying of the xerogel composite by conversion of the solvent (C) into the gaseous state at a temperature and a pressure below the critical temperature and the critical pressure of the solvent (C).

2. The process according to claim 1, wherein the monomer component (A2) comprises at least one polyfunctional aromatic amine.

3. The process according to claim 1 or 2, wherein the monomer component (A2) comprises at least one polyfunctional aromatic amine selected from among 4,4'-methylenebis(2-chloroaniline), 4,4'-diaminodiphenylmethane, 2,4'-diaminodiphenylmethane, 2,2'-diaminodiphenylmethane and oligomeric diaminodiphenylmethane.

4. The process according to any of claims 1 to 3, wherein the monomer component (A1) is selected from among diphenylmethane 2,2'-diisocyanate, diphenylmethane 2,4'-diisocyanate, diphenylmethane 4,4'-diisocyanate, oligomeric diphenylmethane diisocyanate and mixtures of the abovementioned compounds.

5. The process according to any of claims 1 to 4, wherein the monomer component (A1) is oligomeric diphenylmethane diisocyanate having a functionality of at least 2.5.

6. The process according to any of claims 1 to 5, wherein the components (A1) and (A2) each have a functionality of at least two and the sum of the functionality of component (A1) and the functionality of component (A2) is at least 4.5.

7. The process according to any of claims 1 to 6, wherein the open-celled macroporous foam (B) has a volume average pore size of from 20 to 1000 microns.

8. The process according to any of claims 1 to 7, wherein the open-celled macroporous foam (B) is based on reactive polycondensation resins.

9. The process according to any of claims 1 to 8, wherein the open-celled macroporous foam (B) is a melamine-formaldehyde foam.

10. A xerogel composite which can be obtained according to any of claims 1 to 9.

11. The use of the xerogel composite according to claim 10 as insulating material.

12. The use of the xerogel composite according to claim 10 for thermal insulation.

13. The use of the xerogel composite according to claim 10 for vacuum insulation panels.

14. The use of the xerogel composite according to claim 10 in refrigeration units or in buildings.

## Revendications

1. Procédé pour la production de composites de xérogel, comprenant :
(a) la disposition d'une composition contenant un précurseur de gel organique (A) comprenant un composant monomère (A1) à base d'au moins un isocyanate polyfonctionnel et un composant monomère (A2) à base d'au moins un composé choisi parmi des amines polyfonctionnelles et des composés hydroxylés polyfonctionnels ;
(b) la conversion du précurseur de gel (A) en un composite de xérogel en présence d'une mousse macroporeuse (B) à cellules ouvertes et d'un solvant (C) ;
(c) le séchage du composite de xérogel par passage à l'état gazeux du solvant (C) à l'état gazeux, à une température et sous une pression inférieures à la température critique et à la pression critique du solvant (C).

2. Procédé selon la revendication 1, dans lequel le composant monomère (A2) consiste en au moins une amine aromatique polyfonctionnelle.

3. Procédé selon la revendication 1 ou 2, dans lequel le composant monomère (A2) consiste en au moins une amine aromatique polyfonctionnelle choisie parmi la 4,4'-méthylène-bis(2-chloraniline), le 4,4'-diaminodiphénylméthane, le 2,4'-diaminodiphénylméthane, le 2,2'-diaminodiphénylméthane et un diaminodiphénylméthane oligomère.

4. Procédé selon les revendications 1 à 3, dans lequel le composant monomère (A1) est choisi parmi le 2,2'-diphénylméthanediisocyanate, le 2,4'-diphénylméthanediisocyanate, le 4,4'-diphénylméthanediisocyanate, un diphénylméthanediisocyanate oligomère et des mélanges des composés précités.

5. Procédé selon les revendications 1 à 4, dans lequel le composant monomère (A1) est un diphénylméthanediisocyanate oligomère ayant une fonctionnalité d'au moins 2,5.

6. Procédé selon les revendications 1 à 5, dans lequel les composants (A1) et (A2) présentent chacun une fonctionnalité d'au moins deux et la somme de la fonctionnalité du composant (A1) et de la fonctionnalité du composant (A2) est égale à au moins 4,5.

7. Procédé selon les revendications 1 à 6, dans lequel la mousse macroporeuse (B) à cellules ouvertes présente une taille de pore moyennée en volume de 20 à 1 000 micromètres.

8. Procédé selon les revendications 1 à 7, dans lequel la mousse macroporeuse (B) à cellules ouvertes est à base de résines de polycondensation réactives.

9. Procédé selon les revendications 1 à 8, dans lequel la mousse macroporeuse (B) à cellules ouvertes est une mousse mélamine-formaldéhyde.

10. Composites de xérogel pouvant être obtenus selon les revendications 1 à 9.

11. Utilisation des composites de xérogel selon la revendication 10 en tant qu'isolant.

12. Utilisation des composites de xérogel selon la revendication 10 pour l'isolation thermique.

13. Utilisation des composites de xérogel selon la revendication 10 pour des panneaux d'isolation sous vide.

14. Utilisation des composites de xérogel selon la revendication 10 dans des appareils frigorifiques ou dans des bâtiments.
